# EUROPEAN PATENT SPECIFICATION

(11) **EP 2 891 773 B1**
(45) Date of publication and mention of the grant of the patent: **16.11.2016**
(21) Application number: 14181597.7
(22) Date of filing: 20.08.2014
(51) Int. Cl.: F01L 1/344, F16K 31/48, F01L 1/047

(54) **Variable valve timing control apparatus**
Vorrichtung zur Regelung der variablen Ventilsteuerzeit
Appareil de commande du réglage de distribution variable

(30) Priority: 26.08.2013 JP 2013174797
(43) Date of publication of application: 08.07.2015
(73) Proprietor: AISIN SEIKI KABUSHIKI KAISHA, Kariya-shi, Aichi-ken 448-8650 (JP)
(72) Inventor: Kobayashi, Masaki, Kariya-shi, Aichi-ken, 448-8650 (JP)
(74) Representative: Winter, Brandl, Fürniss, Hübner, Röss, Kaiser, Polte - Partnerschaft mbB

(56) References cited:
- DE-A1- 10 307 624
- JP-A- H0 491 308
- JP-A- H09 264 110
- JP-A- H09 317 412
- JP-A- H11 132 016
- JP-A- H11 210 425
- JP-A- H11 218 010
- JP-A- H11 280 430
- US-A1- 2011 277 722

## Description

### TECHNICAL FIELD

This disclosure generally relates to a variable valve timing control apparatus.

### BACKGROUND DISCUSSION

A known variable valve timing control apparatus for controlling a relative rotation phase of a driven-side rotation member relative to a driving-side rotation member that rotates in synchronization with a crankshaft of an internal combustion engine may include an intermediate lock mechanism. The intermediate lock mechanism is configured to lock the aforementioned relative rotation phase at an intermediate phase positioned in a range between a most retarded angle phase and a most advanced angle phase (i.e., the intermediate lock mechanism is in a locked state). Such variable valve timing control apparatus is disclosed in JP2011-256772A which will be hereinafter referred to as Reference 1. The variable valve timing control apparatus disclosed in Reference 1 includes the driven-side rotation member arranged to be coaxial with the driving-side rotation member and integrally rotating with a camshaft for opening and closing a valve of the internal combustion engine, fluid chambers defined between the driving-side rotation member and the driven-side rotation member, and partition portions provided at the driven-side rotation member, each of the partition portions dividing each of the fluid chambers into an advanced angle chamber and a retarded angle chamber. The driving-side rotation member is disposed to be sandwiched between a plate-formed sprocket and a plate-formed cover and tightened by bolts.

At a time when the engine is started or the engine is restarted from a failure state including an engine stall, for example, the intermediate lock mechanism may be in an unlocked state in which the locked state is released so that each of the partition portions is positioned in the vicinity of the most retarded angle phase or the most advanced angle phase. At this time, because the engine is started after once the engine is stopped, almost no oil exists in the fluid chambers. As a result, the camshaft repeatedly rotates in an advanced angle direction and a retarded angle direction by receiving a reaction force from an intake valve or an exhaust valve, which causes the partition portions provided at the driven-side rotation member to repeatedly and strongly make contact with side walls of the fluid chambers. A contact position between each of the partition portions and the side wall of each of the fluid chambers may be thus fluctuated, which may cause the most retarded angle phase and the most advanced angle phase to deviate from original phases that are specified beforehand.

Therefore, according to Reference 1, in order to avoid direct contact between the partition portions and the side walls of the fluid chambers, a first protrusion portion that protrudes in the retarded angle direction is formed at one of the partition portions while a second protrusion portion that protrudes in the advanced angle direction is formed at another one of the partition portions. In a case where the relative rotation phase reaches the most retarded angle phase, the first protrusion portion makes contact with one of the bolt while, in a case where the relative rotation phase reaches the most advanced angle phase, the second protrusion portion makes contact with another one of the bolts.

According to the aforementioned variable valve timing control apparatus, the first and second protrusion portions are formed at the partition portions, and also corresponding recess portions may be formed at the side walls of the fluid chambers so that the protrusion portions are fitted to the recess portions, which may lead to complicated configurations of the driving-side rotation member and the driven-side rotation member. In addition, because a contact area between the bolt in a bar form and the protrusion portion is relatively small, a contact portion of the protrusion portion relative to the bolt may be deformed and a tightening portion of the bolt may change or fluctuate by repeat contact between the bolt and the protrusion portion. The most retarded angle phase and the most advanced angle phase may still deviate from the respective phases that are specified beforehand.

Accordingly, in a case where each of the most retarded angle phase and the most advanced angle phase as a basis for controlling the relative rotation phase deviates or fluctuates, the relative rotation phase is not appropriately controlled.

One option to solve this problem is disclosed for example in DE 103 54 586 A1 according to which the relative rotation phase is changed by reversing a change direction of the relative rotation phase after a first stop state is established so that the relative rotation phase is changed until a second stop state is established in which the change of the relative rotation phase is stopped. More concrete, in case the lock member passes a recess portion by accident it stops at least within a guiding groove and will then be passively moved in a reverse direction using torque moments of the cam shaft until it correctly overlaps a recess portion to get locked into the recess portion by the pushing force of a spring.

A need still exists for a variable valve timing control apparatus including a simple configuration in which a relative rotation phase of a driven-side rotation member relative to a driving-side rotation member is appropriately (actively) controlled on a basis of a most retarded angle phase or a most advanced angle phase.

### SUMMARY

This object is solved by a valve timing control apparatus having the features of the patent claim 1. Preferred further developments of the present invention are subject matter of the sub claims.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a cross-sectional side view schematically illustrating a variable valve timing control apparatus according to a first embodiment disclosed here;
Fig. 2 is a cross-sectional view taken along line II-II in Fig. 1 and illustrating a locked state of an intermediate lock mechanism;
Fig. 3 is a cross-sectional view illustrating a relative rotation phase at a most retarded angle side in a case where an engine is started;

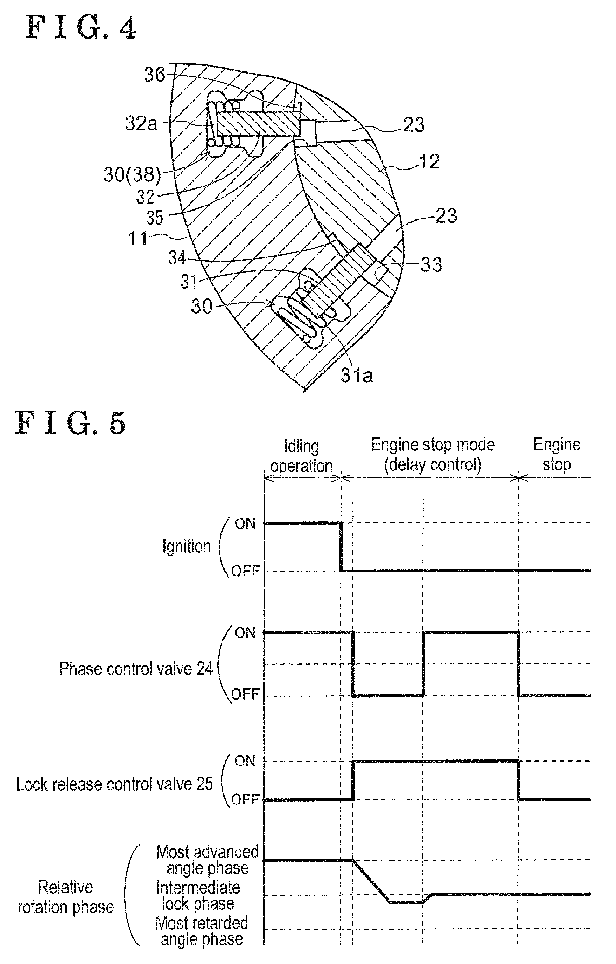

Fig. 4 is a cross-sectional side view illustrating a second operation state of an OCV;
Fig. 5 is a view illustrating an operation of the OCV;

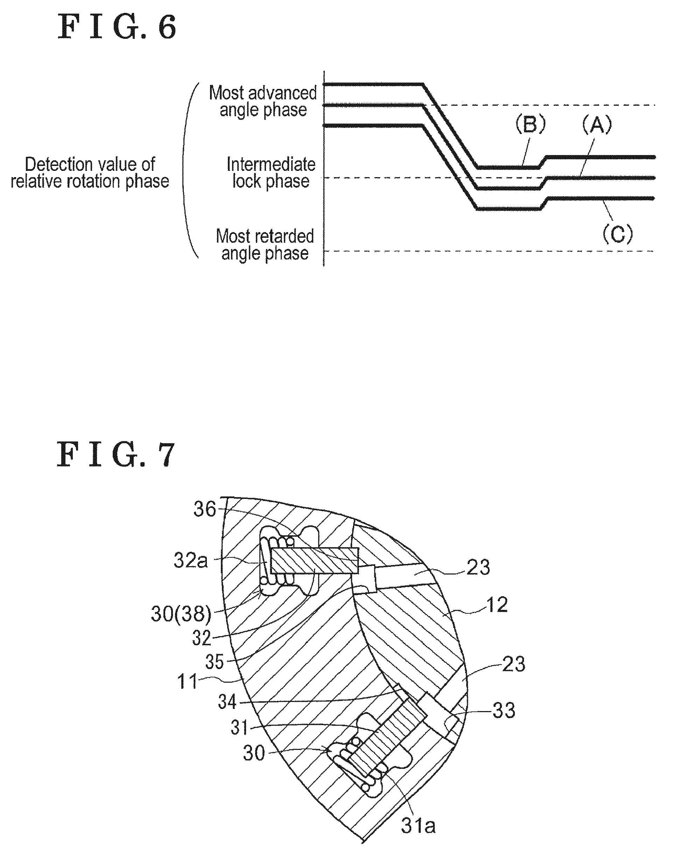

Fig. 6 is a view schematically illustrating the variable valve timing control apparatus according to an alternative embodiment disclosed here; and
Fig. 7 is a cross-sectional side view schematically illustrating the variable valve timing control apparatus disclosed here;

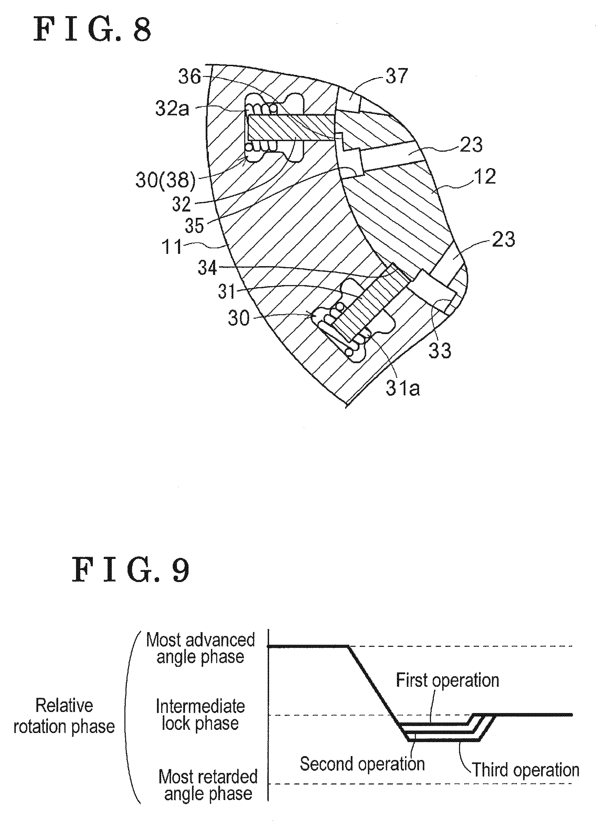

Fig. 8 and 9 are further views.

### DETAILED DESCRIPTION

Embodiments will be explained below. The embodiments are not limited to include the configurations described below and may be appropriately changed or modified.

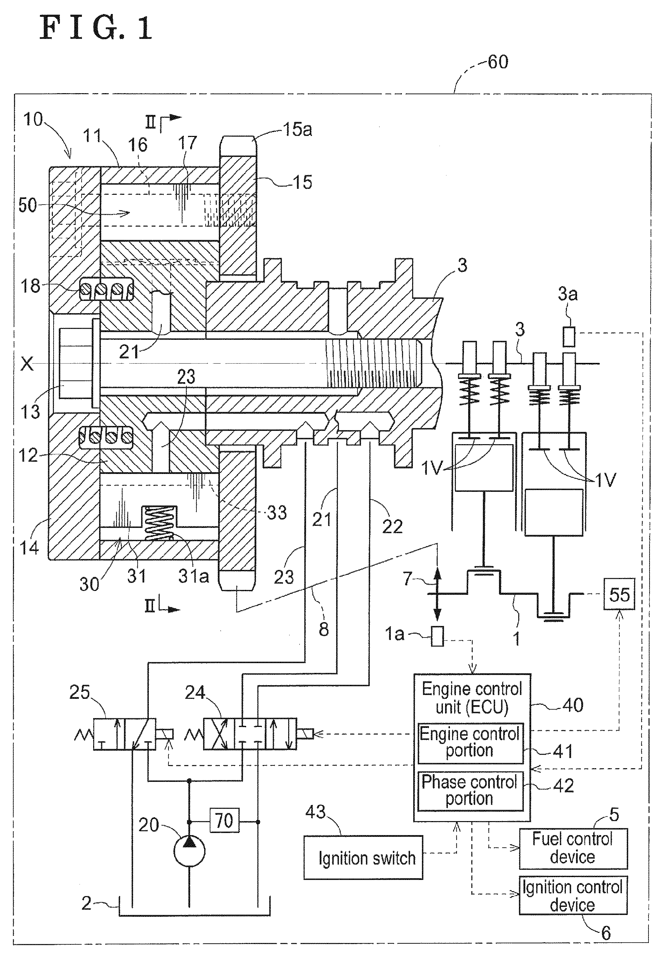

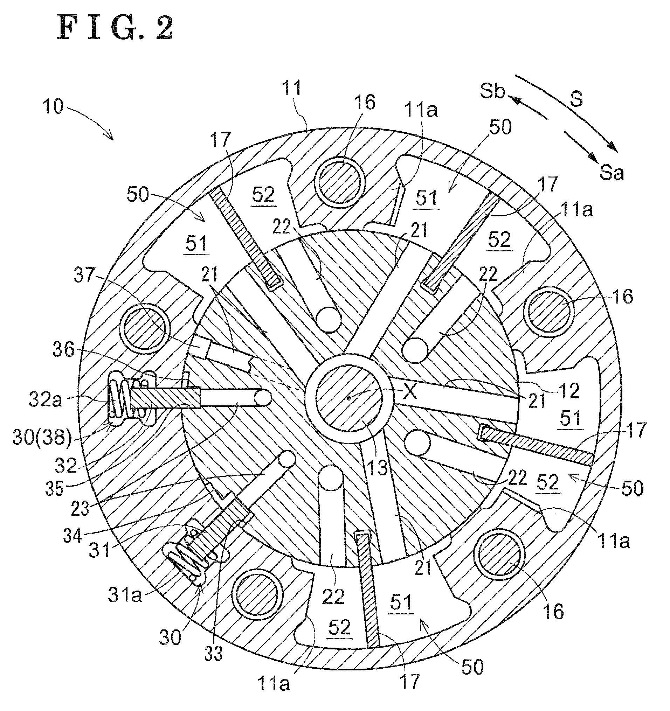

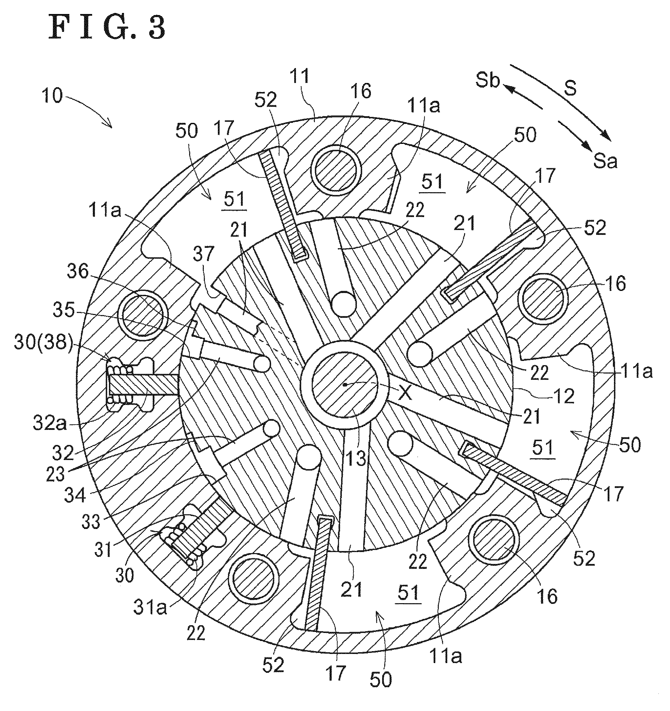

A first embodiment will be explained with reference to the attached drawings. As illustrated in Figs. 1 and 2, a variable valve timing control apparatus according to the first embodiment includes an outer rotor 10 serving as a driving-side rotation member, an inner rotor 12 serving as a driven-side rotation member, and an intermediate lock mechanism 31, 32 that locks a relative rotation between the outer rotor 10 and the inner rotor 12. The outer rotor 10 rotates in synchronization with a crankshaft 1 of an engine E serving as an internal combustion engine via a power transmission member 8. The inner rotor 12 is connected to a camshaft 3 for opening and closing an intake valve in a combustion chamber of the engine E. The inner rotor 12 is arranged to be coaxial with a rotation axis (an axis) X of the outer rotor 10 (which corresponds to an axis of the camshaft 3) so as to be rotatable relative to the outer rotor 10. The intermediate lock mechanism 31, 32 is selectively switchable between a locked state in which a relative rotation phase of the inner rotor 12 relative to the outer rotor 10 is locked at an intermediate lock phase between a most retarded angle phase and a most advanced angle phase as illustrated in Fig. 2 and an unlocked state in which the locked state at the intermediate lock phase is released as illustrated in Fig. 3.

The outer rotor 10 and the inner rotor 12 are arranged and sandwiched between a front plate 14 that is disposed at a front position and a rear plate 15 that is disposed opposite from the front plate 14 (i.e., positioned at a side facing the engine E). Connection bolts 16 each of which serves as a tightening member penetrate through the outer rotor 10 from the front plate 14 to be threadedly engaged with the rear plate 15 so that the outer rotor 10 and the inner rotor 12 are connected to each other.

A sprocket 15a on which the power transmission member 8 formed by a timing chain, for example, is wound is integrally formed at an outer periphery of the rear plate 15. A torsion spring 18 is disposed between the front plate 14 and the inner rotor 12 so as to bias the inner rotor 12 in an advanced angle direction Sa. A fixation bolt 13 that connects and fixes the inner rotor 12 to the camshaft 3 is arranged to be coaxial with the axis X. A portion of an advanced angle oil passage 21 is formed at an outer peripheral side of the fixation bolt 13.

As illustrated in Fig. 2, the outer rotor 10 in a cylindrical form includes plural division portions 11 a projecting radially inwardly from an outer peripheral portion 11 so as to form four oil chambers 50 each of which serves as an example of a hydraulic chamber. The oil chambers 50 are formed in a dispersed manner in a state where each of the oil chambers 50 is disposed between the adjacent division portions 11 a. Therefore, even in a case where the outer rotor 10 rotates via the power transmission member 8, at least one of the oil chambers 50 is disposed at a lower side than the axis X of the camshaft 3. In the embodiment, the number of oil chambers 50 is four but the number is not limited to four and may be appropriately changed.

The inner rotor 12 includes plural vane portions 17 each of which serves as an example of a partition portion and protrudes radially outwardly from a body portion 12 in a column form. The plural oil chambers 50 are divided by the plural vanes 17. Specifically, each of the oil chambers 50 is divided into and formed by an advanced angle chamber 51 in a counterclockwise direction relative to the vane portion 17 and a retarded angle chamber 52 in a clockwise direction relative to the vane portion 217. In addition, the outer rotor 10 and the inner rotor 17 are relatively rotatable to each other within a range where the vane portion 17 is movable in the oil chamber 50. The vane portions 17 may be formed at the outer rotor 10 while the division portions 11 a may be formed at the inner rotor 12.

The outer rotor 10 is driven to rotate in a direction S in Fig. 2 by the power transmission member 8. In a case where oil serving as an example of operation fluid or fluid is supplied to the advanced angle chambers 51, the relative rotation phase of the inner rotor 12 relative to the outer rotor 10 is changed or shifted in the advanced angle direction Sa. In a case where oil is supplied to the retarded angle chambers 52, the relative rotation phase of the inner rotor 12 relative to the outer rotor 10 is changed or shifted in a retarded angle direction 52. A seal is provided at a projection end of each of the vane portions 17 so as to make contact with an inner peripheral surface of the outer rotor 10. A contact surface is formed at the division portion 11 a so as to make contact with the vane portion 17 in a case where the relative rotation phase is specified at the most retarded angle phase as illustrated in Fig. 3. A groove is formed so that oil from the advanced angle oil passage 21 is supplied to between the contact surface and the vane portion 17 in a state where the division portion 11 a and the vane portion 17 are in contact with each other. In the same way, a groove is formed so that oil from a retarded angle oil passage 23 is supplied to between a side surface of the division portion 11 a and the vane portion 17 in a case where the relative rotation phase is specified at the most advanced angle phase.

As illustrated in Figs. 2 and 3, the intermediate lock mechanism includes a lock pin 31, 32 serving as a lock member that is provided at one of the plural vane portions 17 formed at the inner rotor 12. The lock pin 31, 32 is projectable and retractable along the axis X. The intermediate lock mechanism also includes a lock recess portion 23 formed at the rear plate 15 so that the lock pin 31, 32 engages with the lock recess portion 23, and a lock spring that biases the lock pin 31, 32 in a direction where the lock pin 31, 32 engages with the lock recess portion 23. In the present embodiment, the lock pin 31, 32 is provided at the vane portion 17 formed in a block form. Alternatively, the lock pin 31, 32 may be provided at the vane portion 17 formed in a plate form. In addition, the lock pin 31, 32 may be formed at the division portion 11 a while the lock recess portion 23 may be formed at the inner rotor 12, and the lock pin 31, 32 may engage with the lock recess portion 23 in a direction orthogonal to the axis X. Further, two or more of the intermediate lock mechanisms may be provided.

The intermediate lock phase is specified at a substantially center phase between the most retarded angle phase and the most advanced angle phase so that the engine E is operated with improved fuel efficiency. In a case where oil is supplied to the intermediate lock mechanism after the engine E is started so that the intermediate lock mechanism is brought to the unlocked state as the lock pin 31, 32 is separated and removed from the lock recess portion 23, the relative rotation phase of the inner rotor 20 relative to the outer rotor 10 may be arbitrarily specified. In a case where the engine E is stopped, the relative rotation phase is changed to the intermediate lock phase and the lock pin 31, 32 moves to the lock recess portion 23 by a biasing force of the lock spring, which leads to the locked state of the intermediate lock mechanism.

As illustrated in Fig. 1, a supply and discharge port for advanced angle chamber (which will be hereinafter referred to as an advanced angle supply and discharge port) and a supply and discharge port for retarded angle chamber (which will be hereinafter referred to as a retarded angle supply and discharge port) are provided at an upper side than the axis X of the camshaft 3. A relative rotation valve serving as an oil control valve 24 (which will be hereinafter referred to as an OCV) is formed to extend in a direction orthogonal to the axis X. The OCV is configured to choose either the advanced angle chambers 51 or the retarded angle chambers 52 to switch supply and discharge of oil relative to the corresponding chambers. In addition, an intermediate lock valve 25 serving as an oil switching valve (which will be hereinafter referred to as an OSV) is formed along the axis X at a lower side than the axis X of the camshaft 3. The OSV controls supply and discharge of oil relative to the intermediate lock mechanism. The OCV and the OSV are inserted to be positioned within a cam cap and a cylinder head each of which serves as a static member. The position of the OSV is not specified and the OSV may be arranged at a portion where the OSV does not interfere with the OCV or other members.

Each of the OCV and OSV serves as an electromagnetic valve. The OCV includes a spool inserted to be positioned within a valve body, a spring biasing the spool, and an electromagnetic solenoid including a known configuration to drive the spool. The OSV also includes a spool, a spring, and an electromagnetic solenoid. In the embodiment, a hydraulic pump 20 serving as a single pump is provided to supply oil to the OCV and the OSV from an oil pan 2. The hydraulic pump 20 is not limited to a single pump and plural pumps may be provided to supply oil separately to the OCV and the OSV.

Each of the OCV and the OSV is controlled on a basis of a control signal from an engine control unit (ECU). The ECU specifies a target relative rotation phase based on a detection signal from a phase sensor for detecting the relative rotation phase between the outer rotor 10 and the inner rotor 12 and/or a speed sensor for detecting a rotation speed of the engine E, for example, and outputs the control signal to each of the OCV and the OSV.

According to the aforementioned control, the relative rotation phase of the inner rotor 12 relative to the outer rotor 10 is changed or shifted to thereby control an opening and closing timing of the intake valve that is controlled to open and close by the rotation of the camshaft 3.

As illustrated in Fig. 1, the spool of the OCV includes a cylindrical form with a bottom, specifically, a lower portion of the spool in a vertical direction corresponding to the orthogonal direction relative to the axis X is opened. A discharge groove for advanced angle chamber, which will be hereinafter referred to as an advanced angle discharge groove, and an annular groove for supply, which will be hereinafter referred to as a supply annular groove, are formed in parallel to each other as annular grooves at an outer periphery of the spool. The advanced angle supply and discharge port, a supply port, the retarded angle supply and discharge port, and a discharge port are formed at the valve body. The advanced angle supply and discharge port is selectively connected or communicated to either the advanced angle discharge groove or the supply annular groove. The supply port is connected to the supply annular groove. The retarded angle supply and discharge port is selectively connected to either the supply annular groove or a void formed at a lower portion of the spool. The discharge port is formed at a lower portion of the valve body in the vertical direction. A discharge bore is formed at the advanced angle discharge groove of the spool so that the advanced angle supply and discharge port is connected to the discharge bore. Oil is thus discharged to the outside via the discharge port by flowing through a hollow inner portion of the spool. The retarded angle supply and discharge port is directly connected to the discharge port so that oil is discharged to the outside. The OSV is configured to perform supply and discharge of oil relative to the intermediate lock mechanism.

Oil suctioned by the hydraulic pump P from the oil pan 2 is diverged to a supply oil passage for OCV (which will be hereinafter referred to as an OCV supply oil passage) and a supply oil passage for OSV (which will be hereinafter referred to as an OSV supply oil passage) and supplied to the OCV and the OSV respectively.

As illustrated in Fig. 2, the advanced angle oil passage 21 connected to the advanced angle chambers 51, the retarded angle oil passage 22 connected to the retarded angle chambers 52, and a lock release oil passage 23 are formed at the inner rotor 12. As illustrated in Fig. 1, the aforementioned oil passages 21, 22, and 23 are connected to an oil passage formed at an inner portion of the camshaft 3 and connected to the OCV and the OSV from an outer surface of the camshaft 3. In addition, recess portions each of which serves as a half-annular void and an example of a fluid reservoir portion are formed at the cam cap in a connection portion between the camshaft 3 and the cam cap. The recess portions, which include a function for storing oil, are disposed at a lower side than the advanced angle supply and discharge port and the retarded angle supply and discharge port and at an upper side than the axis X of the camshaft 3. The recess portions may be formed at the camshaft 3 in the connection portion between the camshaft 3 and the cam cap.

At timing when the locked state of the intermediate lock mechanism is released, an oil pressure may not be sufficiently applied to the advanced angle chambers 51 for changing the relative rotation phase. Alternatively, in a case where the engine E is stopped in the unlocked state of the intermediate lock mechanism (i.e., failure state such as engine stall, for example), the oil pressure for shifting the intermediate lock mechanism to the locked state is unable to be supplied in the early stage of restart of the engine E. Under such circumstances, the vane portions 17 greatly move or swing in the retarded angle direction relative to the axis X by a reaction force received by the camshaft 3 from a valve spring of the intake valve and acting in an opposite direction from the rotation direction S. Therefore, in a case where the relative rotation phase is at the most retarded angle side as illustrated in Fig. 3, the vane portion 17 may repeatedly and strongly make contact with the contact surface of the division portion 11 a. As a result, deformation of the vane portion 17 and position error or deviation of the division portion 11 a may occur. Such incident may also occur in a state where the relative rotation phase is at the most advanced angle side. Because the vane portions 17 that greatly move or swing in the retarded angle direction and the torsion spring 18 that biases the vane portions 17 (the inner rotor 12) in the advanced angle direction attempt to achieve a balance, each of the vane portions 17 moves unstably, i.e., moves in a reciprocating manner, to thereby repeatedly and strongly make contact with the side surface of the division portion 11 a.

In a case where the engine E is stopped, the hydraulic pump 20 is also stopped. Thus, a pressure from the hydraulic pump 20 is inhibited from being applied to oil that remains at the advanced angle oil passage 21 and the retarded angle oil passage 22. Oil is simply discharged by its own weight to the outside. In the present embodiment, the advanced angle supply and discharge port and the retarded angle supply and discharge port of the OCV are provided at the upper side than the axis X of the camshaft 3. Thus, the OCV is disposed at the upper side than at least one of the oil chambers 50. That is, some of oil that remains at the advanced angle oil passage 21 and the retarded angle oil passage 22 is inhibited from being discharged because of hydraulic head difference between the OCV and at least one of the oil chambers 50. As a result, oil is returned to the advanced angle chambers 51 and the retarded angle chambers 52 to remain thereat. In a case where the vane portion 17 moves in a direction to make contact with the contact surface of the division portion 1 a at the start of the engine E, oil disposed between the vane portion 17 and the contact surface functions as a damper. Thereafter, because the oil pressure for shifting the relative rotation phase is sufficiently supplied to the oil chambers 50 after an elapse of certain amount of time, the repeat contact between the vane portion 17 and the contact surface of the division portion 11 a is further securely inhibited. Accordingly, oil remains at the oil chambers 50 until sufficient oil pressure is applied to the oil chambers 50 from the engine start so as to restrain the contact between the vane portions 17 and the division portions 11 a.

In addition, in the present embodiment, the recess portion 43 is formed at a substantially halfway portion of each of the advanced angle oil passage 21 and the retarded angle oil passage 22, which secures a large amount of oil to return to the oil chambers 50. In order to securely return oil stored at the recess portions to the oil chambers 50, the recess portions may be desirably formed closer to the oil chambers 50 relative to an uppermost portion of each of the advanced angle oil passage 21 and the retarded angle oil passage 22.

In a case where an electric power is not supplied to the electromagnetic solenoid of the OCV, the spool is held in a first operation state by a biasing force of the spring. In the first operation state, the advanced angle supply and discharge port and the supply port are connected to each other. In addition, the retarded angle supply and discharge port and the discharge port are connected to each other. That is, in the first operation state of the OCV, oil is supplied to the advanced angle chambers 51 and oil at the retarded angle chambers 52 is discharged to the outside.

In a case where a predetermined level of power is supplied to the electromagnetic solenoid, the spool moves by a magnetic force of the electromagnetic solenoid to be held in a second operation state. In the second operation state, the advanced angle supply and discharge port and the retarded angle supply and discharge port are both inhibited from being connected to the annular grooves and thus are blocked. That is, in the second operation state of the OCV, supply and discharge of oil relative to the advanced angle chambers 51 and the retarded angle chambers 52 are interrupted.

In a case where a maximum power is supplied to the electromagnetic solenoid, the spool further moves by the electromagnetic force of the electromagnetic solenoid so as to be held in a third operation state. In the third operation state, the advanced angle supply and discharge port and the discharge port are connected to each other and the retarded angle supply and discharge port and the supply port are connected to each other. That is, in the third operation state of the OCV, oil at the advanced angle chambers 51 is released and oil is supplied to the retarded angle chambers 52.

In the variable valve timing control apparatus of the present embodiment, in a case where the engine E is operated, the OCV is controlled among in the first, second and third operation states so as to obtain appropriate fuel efficiency depending on a load state and a speed of the engine E. On the other hand, in a state where the engine E is stopped, the hydraulic pump 20 is stopped and the power supply to the OCV is terminated so that the OCV is retained in the first operation state. At this time, the advanced angle chambers 51 are connected to the supply port of the OCV while the retarded angle chambers 52 are connected the discharge port of the OCV. In the aforementioned state, in a case where oil remains at the OCV supply oil passage between the hydraulic pump P and the OCV, oil at the advanced angle oil passage 21 may be pulled back to the OCV because of viscosity of oil at the OCV supply oil passage. In this case, oil is inhibited from remaining at the advanced angle chambers 51 at the start of the engine E. In a case where the vane portion 17 moves in the direction to make contact with the contact surface of the division portion 11 a, a desired damper effect cannot be exercised.

Therefore, in the present embodiment, after the stop of the engine E, the predetermined level of power is supplied to the OCV for a predetermined time period to hold the OCV in the second operation state so that the advanced angle supply and discharge port and the retarded angle supply and discharge port are blocked. That is, the communication between the advanced angle oil passage 21 and the OCV supply oil passage is interrupted to inhibit oil at the advanced angle oil passage 21 from being pulled back to the OCV. In addition, oil at the OCV supply oil passage is discharged to the oil pan 2 by its own weight. As a result, air enters the OCV supply oil passage where substantially no oil exits. Afterwards, even when the power supply to the OCV is stopped, oil at the advanced angle oil passage 21 is inhibited from being discharged because of hydraulic head difference between the OCV and at least one of the oil chambers 50. Until sufficient oil pressure is supplied to the oil chambers 50 from the engine start, oil that remains at the oil chambers 50 may restrain the contact between the vane portions 17 and the division portions 11 a.

A time period during which oil at the OCV supply oil passage is discharged to the oil pan 2 depends on temperature of oil. Thus, a time period during which the predetermined level of power is supplied to the OCV may be specified so that oil at the OCV supply oil passage is eliminated, specifically, reduced down to a substantially upper position of the axis X of the camshaft 3. The configuration of the OCV is not limited to the above and may be appropriately changed, for example, the first operation state and the third operation state may be reversed. Any electromagnetic valve may be acceptable as long as the first operation state, the second operation state, and the third operation state are obtained and controlled.

A second embodiment will be explained next. A different configuration of the second embodiment from the first embodiment is explained. The same components and members in the second embodiment as those of the first embodiment bear the same reference numerals as the first embodiment.

In the second embodiment, the advanced angle supply and discharge port and the retarded angle supply and discharge port are positioned at the upper side than all of the oil chambers 50. Thus, oil may remain at all of the oil chambers 50 by hydraulic head difference between the OCV and each of the oil chambers 50. As compared to a case where oil remains at only the oil chamber 50 that is positioned at the lower side than the axis X as in the first embodiment, the damper effect of oil may be obtained at all of the oil chambers 50 in the second embodiment. Therefore, the contact between the vane portions 17 and the division portions 11 a may be further restrained.

In addition, even though the advanced angle supply and discharge port and the retarded angle supply and discharge port are provided at the upper side than all the oil chambers 50, the OCV is arranged along the axis X, which may reduce size of the camshaft 3 in a shaft radial direction. Further, the OSV may be efficiently disposed at a space between the OCV and the camshaft 3.

A third embodiment will be explained. A different configuration of the third embodiment from the first embodiment will be explained. The same components and members in the third embodiment as those of the first embodiment bear the same reference numerals as the first embodiment.

In the third embodiment, a known check valve, i.e., a check valve, is provided at the OCV supply oil passage from the hydraulic pump 20 to the OCV for allowing supply of oil from the hydraulic pump 20 to the OCV and prohibiting discharge of oil from the OCV to the hydraulic pump 20. As explained in the first embodiment, in a case where oil remains at the OCV supply oil passage, oil at the advanced angle oil passage 21 may be pulled back to the OCV because of viscosity of oil at the OCV supply oil passage. Nevertheless, in a case where the engine E is stopped, the check valve prohibits oil at the advanced angle oil passage 21 from being discharged to the oil pan via the hydraulic pump 20. Thus, oil may remain between the OCV and the oil chambers 50 by hydraulic head difference between the OCV and the oil chamber 50.

The check valve may be provided at a common supply oil passage from the hydraulic pump 20 to a portion before the OCV supply oil passage and the OSV supply oil passage.

The variable valve timing control apparatus in the aforementioned embodiments may be configured to control an opening and closing timing of not only an intake valve but also an exhaust valve. In addition, in the embodiments, after the stop of the engine E, the electromagnetic solenoid is powered to block the advanced angle supply and discharge port and the retarded angle supply and discharge port for the predetermined time period. Nevertheless, such control for blocking the advanced angle supply and discharge port and the retarded angle supply and discharge port is not necessary. Even in this case, because of hydraulic head difference between the OCV and the oil chamber 50, oil may remain at the advanced angle oil passage 21 and the retarded angle oil passage 22 in some degree. Further, in a case where the electromagnetic solenoid is not powered, the OCV may block the advanced angle supply and discharge port and the retarded angle supply and discharge port. Furthermore, in a case where the electromagnetic solenoid is not powered, the retarded angle chambers 52 and the OCV supply oil passage may be connected to remain oil only at the advanced angle oil passage. In this case, because oil securely remains at the advanced angle chambers 51, an influence caused by the vane portions 17 greatly moving or swinging in the retarded angle direction by a reaction force received by the camshaft 3 may be specifically reduced. Furthermore, in the embodiments, the recess portions serving as the fluid reservoir portions are formed at the connection portion between the camshaft 3 and the cam cap. At this time, the recess portions may be formed at other portion than the connection portion. In the embodiments, the recess portions are formed at the respective halfway portions of the advanced angle oil passage 21 and the retarded angle oil passage 22. Alternatively, the recess portion may be formed at either the advanced angle oil passage 21 or the retarded angle oil passage 22, or the recess portion may not be provided.

The embodiments are applicable to a variable valve timing control apparatus of an internal combustion engine for an automobile or the like, for example.

## Claims

1. A variable valve timing control apparatus comprising:
a driving-side rotation member (10) rotating in synchronization with a crankshaft (1) of an internal combustion engine (E);
a driven-side rotation member (12) arranged to be coaxial with the driving-side rotation member (10) and integrally rotating with a camshaft (3) for opening and closing a valve of the internal combustion engine (E);
an intermediate lock mechanism (31, 32) being selectively switchable between a locked state in which a relative rotation phase of the driven-side rotation member (12) relative to the driving-side rotation member (10) is locked at an intermediate lock phase between a most advanced angle phase and a most retarded angle phase and an unlocked state in which the locked state is released;
a plurality of hydraulic chambers (50) formed between the driving-side rotation member (10) and the driven-side rotation member (12), at least one of the plurality of hydraulic chambers (50) being positioned at a lower side than an axis (X) of the camshaft (3);
a plurality of partition portions (11a) provided at one of the driving-side rotation member (10) and the driven-side rotation member (12), each of the plurality of partition portions (11a) dividing each of the hydraulic chambers (50) into an advanced angle chamber (51) and a retarded angle chamber (52);
an electromagnetic phase control valve (24) including a supply and discharge port that is positioned at an upper side than the axis (X) of the camshaft (3) and switching supply and discharge of fluid relative to the hydraulic chambers (50);
a lock release control valve (25) and
a pump (20) supplying fluid to the electromagnetic phase control valve (24) and to the lock release control valve (25),
**characterized in that**
in an idling operation of the internal combustion engine (E) during which the variable valve timing control apparatus is in a most advanced angle position when the ignition is changed from "on" to "off" to enter an engine stop mode
- the electromagnetic phase control valve (24) is switched from a state for changing the relative rotation phase in the direction to the most advanved angle phase to a state for changing the relative rotation phase in the direction to the most retarded angle phase and simultaneously the lock release control valve (25) is switched from a state for releasing the relative rotation phase to a state for locking the relative rotation phase such that starting from the above switching the relative rotation phase continuously changes from the most advanced angle phase to a phase angle slightly passing the intermediate lock phase,
- which phase angle slightly passing the intermediate lock phase is kept until the electromagnetic phase control valve (24) is switched from the state for changing the relative rotation phase in the direction to the most retarded angle phase to the state for changing the relative rotation phase in the direction to the most advanced angle phase keeping the lock release control valve (25) in the state for locking the relative rotation phase such that the relative rotation phase continuously changes from the phase angle slightly passing the intermediate lock phase back to the intermediate lock phase, wherein
- the phase control valve (24) is finally switched to the state for changing the relative rotation phase in the direction to the most retarded angle phase, the lock release control valve (25) is finally switched to the state for releasing the relative rotation phase and the internal combustion engine (E) is stopped.

2. The variable valve timing control apparatus according to claim 1, wherein the supply and discharge port is positioned at an upper side than all of the hydraulic chambers (50).

3. The variable valve timing control apparatus according to either claim 1 or 2, further comprising a fluid reservoir portion that stores fluid, the fluid reservoir portion being positioned at a lower side than the supply and discharge port and at an upper side than the axis (X) of the camshaft (3).

4. The variable valve timing control apparatus according to any one of claims 1 through 3, wherein the electromagnetic phase control valve (24) blocks the supply and discharge port for a predetermined time period in a case where the internal combustion engine (E) is stopped.

## Patentansprüche

1. Eine variable Ventilsteuerungsvorrichtung bestehend aus:
einem antriebsseitigen Rotationselement (10), rotierend in Synchronisation mit einer Kurbelwelle (1) eines Verbrennungsmotors (E);
einem abtriebsseitigen Rotationselement (12), angeordnet, um koaxial mit dem antriebsseitigen Rotationselement (10) und integral rotierend mit einer Nockenwelle (3), zum Öffnen und Schließen eines Ventils des Verbrennungsmotors (E), zu sein;
einem Zwischenverriegelungsmechanismus (31, 32), der selektiv schaltbar ist zwischen einem verriegelten Zustand, in dem eine relative Rotationsphase des abtriebsseitigen Rotationselements (12) relativ zu dem antriebsseitigen Rotationselement (10) verriegelt ist, bei einer Zwischenverriegelungsphase zwischen einer am weitest fortgeschrittenen Winkelphase und einer am weitest zurückgebliebenen Winkelphase und einem unverriegelten Zustand in dem der verriegelte Zustand freigegeben ist;
einer Vielzahl von Hydraulikkammern (50), ausgebildet zwischen dem antriebsseitigen Rotationselement (10) und dem abtriebsseitigen Rotationselement (12), wobei mindestens eine der Vielzahl von Hydraulikkammern (50) unterhalb einer Achse (X) der Nockenwelle (3) angeordnet ist;
einer Vielzahl von Trennabschnitten (11a), vorgesehen an einem von dem antriebsseitigen Rotationselement (10) und dem abtriebsseitigen Rotationselement (12), wobei jede der Vielzahl von Trennabschnitten (11 a) jede der Hydraulikkammern (50) in eine fortgeschrittene Winkelkammer (51) und eine zurückgebliebene Winkelkammer (52) unterteilt;
einem elektromagnetisches Phasensteuerungsventil (24), umfassend eine Zufuhr- und Abgabeöffnung (51 a, 51 c), die oberhalb der Achse (X) der Nockenwelle (3) angeordnet ist und Zufuhr und Abgabe von Fluid relativ zu den Hydraulikkammern (50) umschaltet,
einem Verriegelungsöffnungssteuerventil (25), und
einer Pumpe (20), Fluid zu dem elektromagnetisches Phasensteuerungsventil (24) und dem Verriegelungsöffnungssteuerventil (25) liefernd;
**gekennzeichnet dadurch, dass**
in einem Leerlaufbetrieb des Verbrennungsmotors (E), während dem die variable Ventilsteuerungsvorrichtung in einer am weitest fortgeschrittenen Winkelposition ist, wenn die Zündung von "on" auf "off" geändert wird, um in den Maschinenstoppmodus einzutreten,
- das elektromagnetische Phasensteuerungsventil (24) umgeschaltet wird von einem Zustand zum Wechsel der relativen Rotationsphase in die Richtung zu der am weitest fortgeschrittenen Winkelphase in einen Zustand zum Wechsel der relativen Rotationsphase in die Richtung zu der am weitest zurückgebliebenen Winkelphase und simultan wird das Verriegelungsöffnungssteuerventil (25) von einem Zustand zum Freigeben der relativen Rotationsphase zu einem Zustand zum Verriegeln der relativen Rotationsphase umgeschaltet, so dass beginnend bei dem vorstehenden Umschalten die relative Rotationsphase sich kontinuierlich ändert, von der am weitest fortgeschrittenen Winkelphase zu einem Phasenwinkel knapp die Zwischenverriegelungsphase passierend,
- der Phasenwinkel knapp die Zwischenverriegelungsphase passierend wird gehalten bis das elektromagnetische Phasensteuerungsventil (24) umgeschaltet wird von einem Zustand zum Wechsel der relativen Rotationsphase in die Richtung zu der am weitest zurückgebliebenen Winkelphase in einen Zustand zum Wechsel der relativen Rotationsphase in die Richtung zu der am weitest fortgeschrittenen Winkelphase unter Beibehaltung des Verriegelungsöffnungssteuerventils (25) in einem Zustand zum Verriegeln der relativen Rotationsphase so dass sich die relative Rotationsphase kontinuierlich ändert, von einem Phasenwinkel knapp die Zwischenverriegelungsphase passierend, zurück zu der Zwischenverriegelungsphase, wobei
- das Phasensteuerungsventil (24) letztlich umgeschaltet wird zu einem Zustand zum Wechsel der relativen Rotationsphase in die Richtung zu der am weitest zurückgebliebene Winkelphase, das Verriegelungsöffnungssteuerventils (25) wird letztlich umgeschaltet zu einem Zustand zum Freigeben der relativen Rotationsphase und der Verbrennungsmotor (E) wird gestoppt.

2. Die variable Ventilsteuerungsvorrichtung nach Anspruch 1, wobei die Zufuhr- und Abgabeöffnung oberhalb aller Hydraulikkammern (50) angeordnet ist.

3. Die variable Ventilsteuerungsvorrichtung nach Anspruch 1 oder 2, ferner bestehend aus einem Fluidreservoirabschnitt, der Fluid speichert, der Fluidreservoirabschnitt ist unterhalb der Zufuhr- und Abgabeöffnung und oberhalb der Achse (X) der Nockenwelle (3) angeordnet.

4. Die variable Ventilsteuerungsvorrichtung nach einem der Ansprüche 1 bis 3, wobei das elektromagnetische Phasensteuerungsventil (24) die Zufuhr- und Abgabeöffnung für eine vorbestimmte Zeitdauer blockiert, für den Fall, wo der Verbrennungsmotor (E) gestoppt wird.

## Revendications

1. Appareil de commande de synchronisation de soupape variable qui comprend :
un élément de rotation côté entraînement (10) qui tourne en synchronisation avec un vilebrequin (1) d'un moteur à combustion interne (E) ;
un élément de rotation côté entraîné (12) prévu pour être coaxial avec l'élément de rotation côté entraînement (10) et qui tourne intégralement avec un arbre à came (3) afin d'ouvrir et de fermer une soupape du moteur à combustion interne (E) ;
un mécanisme de verrouillage intermédiaire (31, 32) qui peut passer sélectivement entre un état verrouillé dans lequel une phase de rotation relative de l'élément de rotation côté entraîné (12) par rapport à l'élément de rotation côté entraînement (10) est verrouillé à une phase de verrouillage intermédiaire entre un angle de phase le plus avancé et un angle de phase le plus retardé et un état déverrouillé dans lequel l'état verrouillé est libéré ;
une pluralité de chambres hydrauliques (50) formées entre l'élément de rotation côté entraînement (10) et l'élément de rotation côté entraîné (12), au moins l'une de la pluralité de chambres hydrauliques (50) étant positionnée au niveau d'un côté inférieur à un axe (X) de l'arbre à came (3) ;
une pluralité de parties de séparation (11a) prévues au niveau de l'un de l'élément de rotation côté entraînement (10) et de l'élément de rotation côté entraîné (12), chacune de la pluralité de parties de séparation (11a) séparant chacune des chambres hydrauliques (50) en une chambre à angle avancé (51) et une chambre à angle retardé (52) ;
une soupape de commande de phase électromagnétique (24) qui comprend un orifice d'alimentation et d'évacuation qui est positionné au niveau d'un côté plus élevé que l'axe (X) de l'arbre à came (3), et qui régule l'alimentation en fluide et l'évacuation du fluide par rapport aux chambres hydrauliques (50) ;
une soupape de commande de déverrouillage (25), et
une pompe (20) qui fournit un fluide à la soupape de commande de phase électromagnétique (24) et à la soupape de commande de déverrouillage (25),
**caractérisé en ce que**
pendant le ralenti du moteur à combustion interne (E) pendant lequel l'appareil de commande de synchronisation de soupape variable se trouve dans une position à angle plus avancé lorsque l'allumage passe de « ON » à « OFF » afin de passer à un mode d'arrêt du moteur
- la soupape de commande de phase électromagnétique (24) passe d'un état de changement de phase de rotation relative dans la direction d'angle de phase le plus avancé à un état de changement de phase de rotation relative dans la direction d'angle de phase le plus retardé, et, en même temps, la soupape de commande de déverrouillage (25) passe d'un état de libération de la phase de rotation relative à un état de verrouillage de la phase de rotation relative de sorte que le démarrage à partir de la phase de rotation relative passe en continu de l'angle de phase le plus avancé à un angle de phase qui dépasse légèrement la phase de verrouillage intermédiaire,
- ledit angle de phase qui dépasse légèrement la phase de verrouillage intermédiaire étant maintenu jusqu'à ce que la soupape de commande de phase électromagnétique (24) passe de l'état de changement de phase de rotation relative dans la direction de l'angle de phase le plus retardé à l'état de changement de phase de rotation relative dans la direction de l'angle de phase le plus avancé, en maintenant la soupape de commande de déverrouillage (25) dans l'état de verrouillage de la phase de rotation relative afin que la phase de rotation relative passe en continu de l'angle de phase qui dépasse légèrement la phase de verrouillage intermédiaire à la phase de verrouillage intermédiaire, dans lequel
- la soupape de commande de phase (24) passe enfin à l'état de changement de phase de rotation relative dans la direction de l'angle de phase le plus retardé, la soupape de déverrouillage (25) passe enfin à l'état de libération de la phase de rotation relative, et le moteur à combustion interne (E) est arrêté.

2. Appareil de commande de synchronisation de soupape variable selon la revendication 1, dans lequel l'orifice d'alimentation et d'évacuation est positionné au niveau d'un côté plus élevé que l'ensemble des chambres hydrauliques (50).

3. Appareil de commande de synchronisation de soupape variable selon la revendication 1 ou 2, qui comprend en outre une partie de réservoir de fluide qui contient un fluide, la partie de réservoir de fluide étant positionnée au niveau d'un côté inférieur à l'orifice d'alimentation et d'évacuation, et au niveau d'un côté plus élevé que l'axe (X) de l'arbre à came (3).

4. Appareil de commande de synchronisation de soupape variable selon l'une quelconque des revendications 1 à 3, dans lequel la soupape de commande de phase électromagnétique (24) bloque l'orifice d'alimentation et d'évacuation pendant une durée prédéterminée lorsque le moteur à combustion interne (E) est arrêté.
